# EUROPEAN PATENT APPLICATION

(11) **EP 4 647 934 A1**
(43) Date of publication of application: **12.11.2025**
(21) Application number: 23919307.1
(22) Date of filing: 25.08.2023
(51) Int. Cl.: G06F 16/2455

(54) **DATABASE TASK PROCESSING METHOD AND APPARATUS, AND DATABASE SYSTEM AND DISASTER RECOVERY SYSTEM**

(30) Priority: 31.01.2023 CN 202310145290
(71) Applicant: Huawei Technologies Co., Ltd., Shenzhen, Guangdong 518129 (CN)
(72) Inventor: REN, Ren, Shenzhen, Guangdong 518129 (CN); LAN, Longwen, Shenzhen, Guangdong 518129 (CN)
(74) Representative: Pfenning, Meinig & Partner mbB
(86) International application number: PCT/CN2023/115091
(87) International publication number: WO 2024/159742

(57) **Abstract**

This application discloses a database task processing method and apparatus, a database system, and a redundancy system, and belongs to the field of database technologies. A computing system receives a deployment mode selection instruction for a target database, where the deployment mode selection instruction instructs the target database to use a hybrid row-column storage deployment mode or a row-column storage separation deployment mode in a storage system. The computing system determines, based on the deployment mode selection instruction, an execution plan corresponding to the target database, where the execution plan matches a deployment mode indicated by the deployment mode selection instruction. The computing system processes, in the storage system, a database task for the target database based on the execution plan. In the database system provided in this application, users can flexibly select the hybrid row-column storage deployment mode or the row-column storage separation deployment mode to deploy a database supporting running of an HTAP system, and therefore deployment flexibility and application flexibility of the database system are improved.

## Description

This application claims priority to Chinese Patent Application No. 202310145290.8, filed on January 31, 2023 and entitled "DATABASE TASK PROCESSING METHOD AND APPARATUS, DATABASE SYSTEM, AND REDUNDANCY SYSTEM", which is incorporated herein by reference in its entirety.

### TECHNICAL FIELD

This application relates to the field of database technologies, and in particular, to a database task processing method and apparatus, a database system, and a redundancy system.

### BACKGROUND

A database system generates different types of databases for different service scenarios. Currently, online transactional processing (online transactional processing, OLTP) and online analytical processing (online analytical processing, OLAP) are two types of common database system applications. An OLTP system is used to manage and process transactions. The OLTP system is mainly used in a scenario of recording interaction between the OLTP system and a service system during daily operation, supports query and analysis of the interaction records to obtain an analytical result. For example, the OLTP system is a sales order recording system, a bank transaction system, or a telecom operator charging system. An OLTP database typically performs storage by row. An OLAP system is used to analyze data. The OLAP system is mainly used in a scenario of more read requests than write requests. For example, the OLAP system provides users with data services such as reports, analysis, and business intelligence. An OLAP database typically performs storage by column.

As current data services become increasingly blurred in which AP services included in TP and TP services included in AP, and database technologies develop towards hybrid transactional and analytical processing (hybrid transactional and analytical processing, HTAP). An HTAP system can process both online transactions and online analysis services and support hybrid load processing. The HTAP system includes transactional load requiring support of a database that performs storage by row and analytical load requiring support of a database that performs storage by column. Therefore, how to provide a database that supports running of the HTAP system is a

### SUMMARY

This application provides a database task processing method and apparatus, a database system, and a redundancy system.

According to a first aspect, a database task processing method is provided, and is applied to a database system. The database system includes a computing system and a storage system. The method includes: The computing system receives a deployment mode selection instruction for a target database, where the deployment mode selection instruction instructs the target database to use a hybrid row-column storage deployment mode or a row-column storage separation deployment mode in the storage system. The computing system determines, based on the deployment mode selection instruction, an execution plan corresponding to the target database, where the execution plan matches a deployment mode indicated by the deployment mode selection instruction. The computing system processes, in the storage system, a database task for the target database based on the execution plan.

In this application, the storage system in the database system supports a database in using both the hybrid row-column storage deployment mode and the row-column storage separation deployment mode. Correspondingly, the computing system in the database system can formulate respective matching execution plans based on different deployment modes used by the database, to execute a database task for the database. For the database system, users can comprehensively consider advantages and disadvantages of the hybrid row-column storage deployment mode and the row-column storage separation deployment mode, and flexibly select the hybrid row-column storage deployment mode or the row-column storage separation deployment mode, so that the deployed database can support running of an HTAP system, and deployment flexibility and application flexibility of the database system are improved.

Optionally, the storage system includes a memory-level row storage module, a block-level row storage module, and a column storage module. The memory-level row storage module and the block-level row storage module use a row storage format, and the column storage module uses a column storage format. An implementation in which the computing system determines, based on the deployment mode selection instruction, the execution plan corresponding to the target database includes: The computing system determines, based on the deployment mode selection instruction, a storage module used for the target database. The computing system determines the execution plan for the storage module used for the target database. When the deployment mode selection instruction indicates the hybrid row-column storage deployment mode, the storage module used for the target database includes the memory-level row storage module and the column storage module. When the deployment mode selection instruction indicates the row-column storage separation deployment mode, the storage module used for the target database includes the memory-level row storage module, the block-level row storage module, and the column storage module.

In this application, the computing system may separately use different storage modules in the storage system to construct a database that uses the hybrid row-column storage deployment mode and a database that uses the row-column storage separation deployment mode, and determine respective matching execution plans for storage modules used to construct databases of different deployment modes, to meet execution requirements of the database tasks in the different deployment modes.

Optionally, when the deployment mode selection instruction indicates the hybrid row-column storage deployment mode, the memory-level row storage module used for the target database is configured to store newly written data in the row storage format, and when an amount of data stored in the memory-level row storage module is greater than a first threshold, old data stored in the memory-level row storage module is transferred to the column storage module used for the target database for storage in the column storage format. When the deployment mode selection instruction indicates the row-column storage separation deployment mode, the memory-level row storage module used for the target database is configured to store newly written data in the row storage format, and when an amount of data stored in the memory-level row storage module is greater than a second threshold, old data stored in the memory-level row storage module is transferred to the block-level row storage module used for the target database for storage, and the column storage module used for the target database is configured to store, in the column storage format, data stored in the memory-level row storage module and the block-level row storage module.

Optionally, the storage system includes multiple storage nodes including a first storage node, and the first storage node includes a memory-level row storage module and a column storage module. An implementation in which the computing system determines, based on the deployment mode selection instruction, the storage module used for the target database includes: When the deployment mode selection instruction indicates the hybrid row-column storage deployment mode, the computing system determines to use the memory-level row storage module and the column storage module on the first storage node for the target database. When the amount of data stored in the memory-level row storage module on the first storage node is greater than the first threshold, the old data stored in the memory-level row storage module on the first storage node is transferred to the column storage module on the first storage node for storage in the column storage format.

Optionally, the storage system includes multiple storage nodes including a second storage node and a third storage node. The second storage node includes a memory-level row storage module and a block-level row storage module, the third storage node includes a column storage module, and the second storage node and the third storage node are communicatively connected. An implementation in which the computing system determines, based on the deployment mode selection instruction, the storage module used for the target database includes: When the deployment mode selection instruction indicates the row-column storage separation deployment mode, the computing system determines to use the memory-level row storage module and the block-level row storage module on the second storage node and the column storage module on the third storage node for the target database. When the amount of data stored in the memory-level row storage module on the second storage node is greater than the second threshold, the old data stored in the memory-level row storage module on the second storage node is transferred to the block-level row storage module on the second storage node for storage, and the column storage module on the third storage node is configured to store, in the column storage format, the data stored in the memory-level row storage module and the block-level row storage module on the second storage node.

Optionally, the third storage node is located on a cloud, an analytical processing engine is further deployed on the cloud, and the database task includes an analytical processing task. When the deployment mode selection instruction indicates the row-column storage separation deployment mode, an implementation in which the computing system processes, in the storage system, the database task for the target database based on the execution plan includes: When the computing system receives the analytical processing task for the target database, the computing system sends an analytical processing request to the analytical processing engine, where the analytical processing request requests the analytical processing engine to execute the analytical processing task. The computing system receives an analytical processing result that corresponds to the analytical processing task and that is sent by the analytical processing engine.

In this application, the computing system may invoke computing power based on data storage distribution, to fully utilize surplus computing power and low-cost storage on the cloud, thereby achieving an effect of on-cloud and off-cloud collaborative computing and analysis.

Optionally, the computing system displays a first option and a second option on a deployment mode selection interface of the target database, where the first option indicates the hybrid row-column storage deployment mode, and the second option indicates the row-column storage separation deployment mode. If a selection operation on the first option is detected, the computing system determines that the deployment mode selection instruction is received, where the deployment mode selection instruction indicates the hybrid row-column storage deployment mode. If a selection operation on the second option is detected, the computing system determines that the deployment mode selection instruction is received, where the deployment mode selection instruction indicates the row-column storage separation deployment mode.

In this application, the computing system may provide a visualized interface for users to select a deployment mode of a database, thereby improving user experience.

According to a second aspect, a database task processing apparatus is provided. The apparatus includes multiple functional units interacting with each other to implement the method in the first aspect and the implementations of the first aspect. The multiple functional units may be implemented based on software, hardware, or a combination of software and hardware, and the multiple functional units may be randomly combined or divided based on a specific implementation.

According to a third aspect, a database system is provided, and includes a computing system and a storage system, where the storage system is configured to store data, and the computing system is configured to invoke the storage system to implement the method in the first aspect and the implementations of the first aspect.

According to a fourth aspect, a redundancy system is provided, and includes: a production system and a disaster recovery system, where the production system is the database system according to the third aspect, and the disaster recovery system is an application-level disaster recovery system or a data-level disaster recovery system of the production system.

Optionally, the disaster recovery system is deployed on a cloud.

According to a fifth aspect, a computer device is provided, and includes a processor and a memory, where
the memory is configured to store a computer program, and the computer program includes program instructions; and
the processor is configured to invoke the computer program to implement the method in the first aspect and the implementations of the first aspect.

According to a sixth aspect, a computer-readable storage medium is provided, where the computer-readable storage medium stores instructions; and when the instructions are executed by a processor, the method in the first aspect and the implementations of the first aspect is implemented.

According to a seventh aspect, a computer program product is provided, and includes a computer program. When the computer program is executed by a processor, the method in the first aspect and the implementations of the first aspect is implemented.

According to an eighth aspect, a chip is provided. The chip includes a programmable logic circuit and/or program instructions. When the chip runs, the method in the first aspect and the implementations of the first aspect is implemented.

### BRIEF DESCRIPTION OF DRAWINGS

FIG. 1 is a diagram of a structure of a database system according to an embodiment of this application;
FIG. 2 is a diagram of a database that uses a hybrid row-column storage deployment mode according to an embodiment of this application;
FIG. 3 is a diagram of a database that uses a row-column storage separation deployment mode according to an embodiment of this application;
FIG. 4 is a diagram of expansion deployment of a database appliance according to an embodiment of this application;
FIG. 5 is a diagram of a structure of a redundancy system according to an embodiment of this application;
FIG. 6 is a schematic flowchart of a database task processing method according to an embodiment of this application;
FIG. 7 is a diagram of a display interface according to an embodiment of this application;
FIG. 8 is a diagram of a structure of a database task processing apparatus according to an embodiment of this application; and
FIG. 9 is a diagram of a hardware structure of a computer device according to an embodiment of this application.

### DESCRIPTION OF EMBODIMENTS

To make objectives, technical solutions, and advantages of this application clearer, the following further describes implementations of this application in detail with reference to the accompanying drawings.

An HTAP system that supports hybrid load processing includes transactional load and analytical load. The transactional load requires support of a database that performs storage by row, and the analytical load requires support of a database that performs storage by column. Therefore, a database currently used in the HTAP system usually uses a hybrid row-column storage deployment mode or a row-column storage separation deployment mode. In a database that uses the hybrid row-column storage deployment mode, a row storage format and a column storage format are used to store a piece of data together. In a database that uses the row-column storage separation deployment mode, a row storage format and a column storage format are used to individually store a piece of data. Hybrid row-column storage and row-column storage separation have respective advantages and disadvantages. For example, the hybrid row-column storage has high storage space efficiency, but the transactional load and the analytical load interfere with each other. The row-column storage separation can independently support the transactional load and the analytical load, but storage costs are high.

Based on this, this application provides a database system. The database system includes a computing system and a storage system. The storage system supports a database in using both the hybrid row-column storage deployment mode and the row-column storage separation deployment mode. After receiving a deployment mode selection instruction for a target database, the computing system determines, based on a deployment mode indicated by the deployment mode selection instruction, an execution plan corresponding to the target database, and then processes a database task for the target database based on the execution plan. The database system provided in this application supports flexible deployment of databases of different deployment modes. For the database system, users can comprehensively consider advantages and disadvantages of the hybrid row-column storage deployment mode and the row-column storage separation deployment mode, and flexibly select the hybrid row-column storage deployment mode or the row-column storage separation deployment mode, so that the deployed database can support running of an HTAP system, and deployment flexibility and application flexibility of the database system are improved.

The following describes technical solutions of this application in detail from multiple perspectives such as a system, a method procedure, a virtual apparatus, and a hardware apparatus.

The following describes the system in embodiments of this application by using an example.

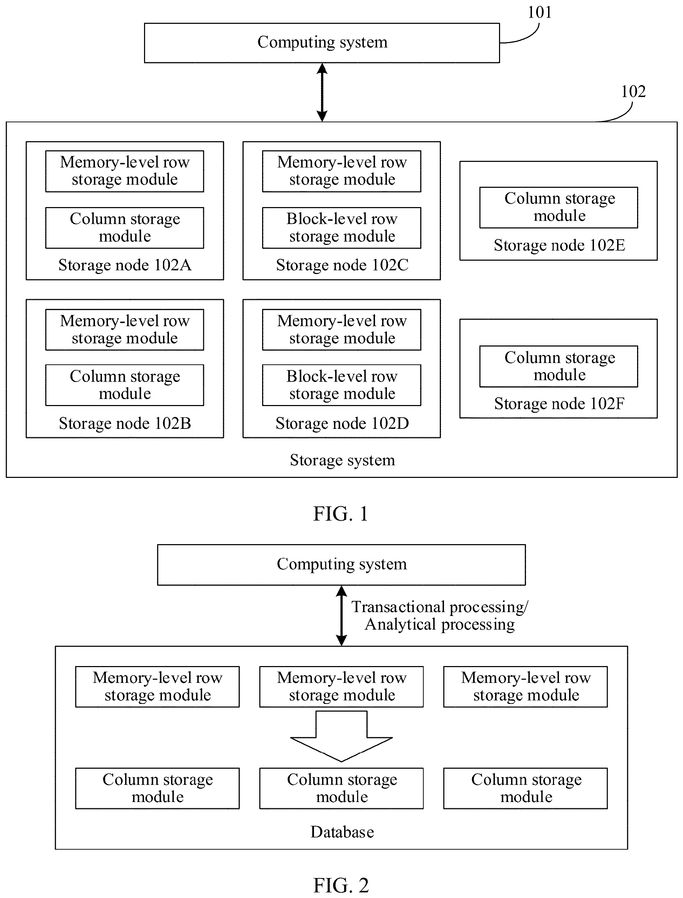

For example, FIG. 1 is a diagram of a structure of a database system according to an embodiment of this application. As shown in FIG. 1, the database system includes a computing system 101 and a storage system 102. The storage system 102 is configured to store data, and the computing system 101 is configured to invoke the storage system 102 to complete execution of a database task. The storage system 102 includes a controller and a storage medium, where the storage medium is configured to store data, and the controller is configured to read data from the storage medium or write data into the storage medium, to cooperate with the computing system 101 to complete execution of the database task. Optionally, the database task includes a transactional processing task and an analytical processing task.

That the computing system 101 invokes the storage system 102 may be understood as that the computing system 101 performs a series of operations on the storage system 102, including but not limited to a read operation, a write operation, a rename operation, a create operation, or a delete operation. The read operation is used to read data from the storage system 102. The write operation is used to write data to the storage system 102 in an overwrite manner. The rename operation is used to rename data or a file in the storage system 102. The create operation is used to create a new file or storage volume in the storage system 102 to write new data. The delete operation is used to delete original data in the storage system 102.

Optionally, refer to FIG. 1, the storage system 102 includes a memory (in-memory)-level row storage module, a block (block)-level row storage module, and a column storage module. The memory-level row storage module and the block-level row storage module use a row storage format, and the column storage module uses a column storage format. That is, both the memory-level row storage module and the block-level row storage module store data by row, and the column storage module stores data by column. Optionally, the memory-level row storage module may be implemented based on a persistent memory medium. Because the persistent memory medium has a short read/write delay and is suitable for transaction data, the persistent memory medium is applicable to row storage, thereby facilitating a byte-level operation on data by row in a database transaction. The block-level row storage module may be implemented based on a block storage medium such as a solid state disk (solid state disk, SSD) or a hard disk drive (hard disk drive, HDD). The column storage module may be implemented based on a storage array, distributed storage, or cloud storage.

Optionally, refer to FIG. 1. The storage system 102 includes multiple storage nodes 102A to 102F (collectively referred to as a storage node 102). One storage node 102 may be one server, a server cluster including multiple servers, a cloud platform, or the like. The memory-level row storage module, the block-level row storage module, and the column storage module may be deployed on the multiple storage nodes 102 in a distributed manner. Each storage node 102 may include one or more of the memory-level row storage module, the block-level row storage module, and the column storage module. For example, the storage system shown in FIG. 1 includes three types of storage nodes. Storage nodes 102A and 102B of one type include memory-level row storage modules and column storage modules. Storage nodes 102C and 102D of another type include memory-level row storage modules and block-level row storage modules. Storage nodes 102E and 102F of still another type include column storage modules. For ease of description, in subsequent embodiments, a storage node (for example, the storage node 102A or 102B) including a memory-level row storage module and a column storage module is referred to as a first storage node, a storage node (for example, the storage node 102C or 102D) including a memory-level row storage module and a block-level row storage module is referred to as a second storage node, and a storage node (for example, the storage node 102E or 102F) including a column storage module is referred to as a third storage node. The second storage node and the third storage node are communicatively connected. The first storage node and the second storage node may be servers, and the third storage node may be a server or deployed on a cloud. A quantity of storage nodes and a type of a storage module included in the storage node shown in FIG. 1 are merely used as an example for description, and are not intended to limit the storage system in embodiments of this application. For example, a storage node in the storage system may further include all three types of storage modules: the memory-level row storage module, the block-level row storage module, and the column storage module. In this case, the storage node may be used as the first storage node, or may be used as the second storage node, or may be used as the third storage node.

In embodiments of this application, for the computing system 101, the row storage module and the column storage module in the storage system 102 are implemented as two independent software components. The two software components may be separately deployed, or may be deployed together. Correspondingly, the computing system 101 may flexibly deploy, in the storage system 102, the database that uses the hybrid row-column storage deployment mode and the database that uses the row-column storage separation deployment mode. Optionally, multiple databases may be deployed in the storage system 102, and the multiple databases may separately use the hybrid row-column storage deployment mode or the row-column storage separation deployment mode.

For example, FIG. 2 is a diagram of a database that uses a hybrid row-column storage deployment mode according to an embodiment of this application. As shown in FIG. 2, when the database uses the hybrid row-column storage deployment mode, a row storage module that is in the storage system and that is used for the database includes the memory-level row storage module. The memory-level row storage module serves as a performance layer to support fast read and write. The column storage module serves as a capacity layer, that is, the column storage module serves as a main memory to support a large amount of data storage. The memory-level row storage module is configured to store newly written data in the row storage format, and when an amount of data stored in the memory-level row storage module is greater than a first threshold, old data stored in the memory-level row storage module is transferred to the column storage module for storage in the column storage format. The memory-level row storage module and the column storage module store one piece of data together to support a transactional load and an analytical load, so that the computing system performs transactional processing and analytical processing.

Optionally, when the database uses the hybrid row-column storage deployment mode, a storage node used in the database includes the row storage module and the column storage module. In this deployment mode, the computing system 101 may invoke the first storage node in the storage system 102 to deploy the database. When the amount of data stored in the memory-level row storage module on the first storage node is greater than the first threshold, the old data stored in the memory-level row storage module on the first storage node is transferred to the column storage module on the first storage node for storage in the column storage format

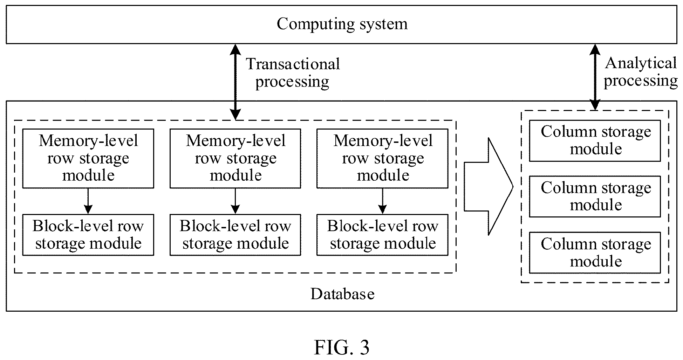

For example, FIG. 3 is a diagram of a database that uses a row-column storage separation deployment mode according to an embodiment of this application. As shown in FIG. 3, when the database uses the row-column storage separation deployment mode, a row storage module that is in the storage system and that is used for the database includes the memory-level row storage module and the block-level row storage module. The memory-level row storage module serves as a performance layer to support fast read and write. The block-level row storage module serves as a capacity layer, that is, the block-level row storage module serves as a main memory to support a large amount of data storage. The memory-level row storage module is configured to store newly written data in the row storage format, and when an amount of data stored in the memory-level row storage module is greater than a second threshold, old data stored in the memory-level row storage module is transferred to the block-level row storage module for storage. The column storage module is configured to store, in the column storage format, data stored in the memory-level row storage module and the block-level row storage module. The memory-level row storage module and the block-level row storage module store one piece of data together to support a transactional load, so that the computing system performs transactional processing. The column storage module independently stores one piece of data to support an analytical load, so that the computing system performs analytical processing.

Optionally, when the database uses the row-column storage separation deployment mode, the row storage module and the column storage module that are used for the database are located on different storage nodes. In this deployment mode, the computing system 101 may invoke the second storage node and the third storage node in the storage system 102 to deploy the database. When the amount of data stored in the memory-level row storage module on the second storage node is greater than the second threshold, the old data stored in the memory-level row storage module on the second storage node is transferred to the block-level row storage module on the second storage node for storage. The column storage module on the third storage node is configured to store, in the column storage format, data stored in the memory-level row storage module and the block-level row storage module on the second storage node.

In embodiments of this application, regardless of whether the database uses the hybrid row-column storage deployment mode or the row-column storage separation deployment mode, row storage needs to be converted into column storage. In the row-column storage separation deployment mode, when data is written into the memory-level row storage module on the second storage node, a data change log (data change log) (or may also be referred to as a logical log) may be generated. The data change log is transmitted, through inter-node communication, to a node (the third storage node) on which the column storage module is located. The third storage node applies each column of data in each row in the data change log to a data page corresponding to the column storage module. In the hybrid row-column storage deployment mode, for a memory-level row storage module and a column storage module that are located on a same storage node (the first storage node), when the amount of data stored in the memory-level row storage module is greater than a first threshold, the first storage node converts older data in the memory-level row storage module into the data change log and applies the data change log to the column storage module. A difference between row-column conversion in the hybrid row-column storage deployment mode and row-column conversion in the row-column storage separation deployment mode is whether cross-node communication is required.

Optionally, the data change log includes a log sequence number (log sequence number, LSN), and the LSN identifies a data location, to implement data consistency between the row storage module and the column storage module. When HTAP analysis is performed, the LSN can be used to combine analytical calculation results of the row storage module and column storage module to avoid inconsistencies such as analytics data loss or duplication.

The row-column storage separation deployment mode provided in embodiments of this application may be further used for expansion of a database appliance. A physical form of the database appliance is usually a cabinet. An internal server is classified into a computing server and a storage server. The computing server is responsible for database management and supports storage virtualization, to achieve high availability of database access. The storage server is responsible for storage, indexing, disk expansion, and disk high availability. In the solution of this application, the memory-level row storage module and the block-level row storage module are deployed on a storage server of the database appliance, and the column storage module is deployed on the cloud. The database appliance is communicatively connected to the cloud through a virtual bus (virtual bus, vBUS), to implement an off-cloud to on-cloud data transmission capability.

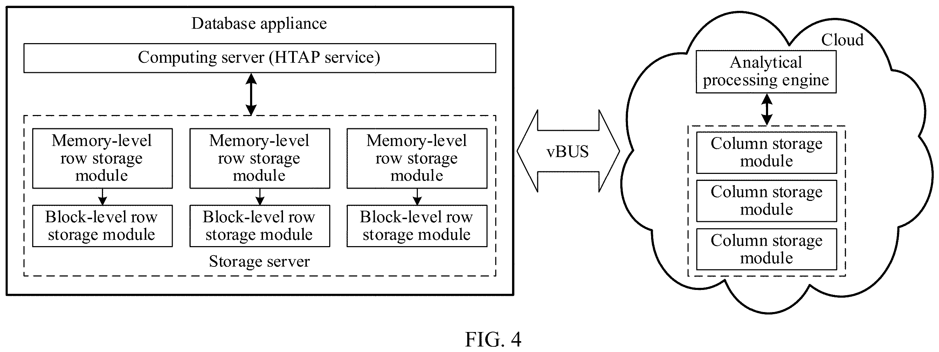

For example, FIG. 4 is a diagram of expansion deployment of a database appliance according to an embodiment of this application. As shown in FIG. 4, the database appliance includes a computing server and a storage server. The computing server is configured to process an HTAP service, and the storage server includes the memory-level row storage module and the block-level row storage module. The column storage module and an analytical processing engine are deployed on the cloud. The database appliance is communicatively connected to the cloud through the vBUS. In this solution, a database transaction operation is performed by the local computing server, and recently written transaction data is stored in the memory-level row storage module and the block-level row storage module of the local storage server. Older data is stored on the cloud in the column storage format. When users initiate an analytics operation on the database appliance, the local computing server initiates a request to the analytical processing engine on the cloud to analyze and process data in the column storage module on the cloud. After completing analytical processing of the data in the column storage module, the analytical processing engine on the cloud sends an analytical result to the local database appliance. When a part of data that is not stored in the cloud, namely, the transaction data that is recently written, exists locally, the local computing server may also perform analytical processing on the part of local data, and finally return a combination of the analytical result on the cloud and a local analytical result to users. In this solution, users only need to contact and use the database appliance. All requests are sent to the computing server in the database appliance. The computing server in the database appliance invokes computing power based on data storage distribution. In this way, surplus computing power and low-cost storage on the cloud can be fully utilized, thereby achieving on-cloud and off-cloud collaborative computing and analysis, and improving an expansion capability of the database appliance.

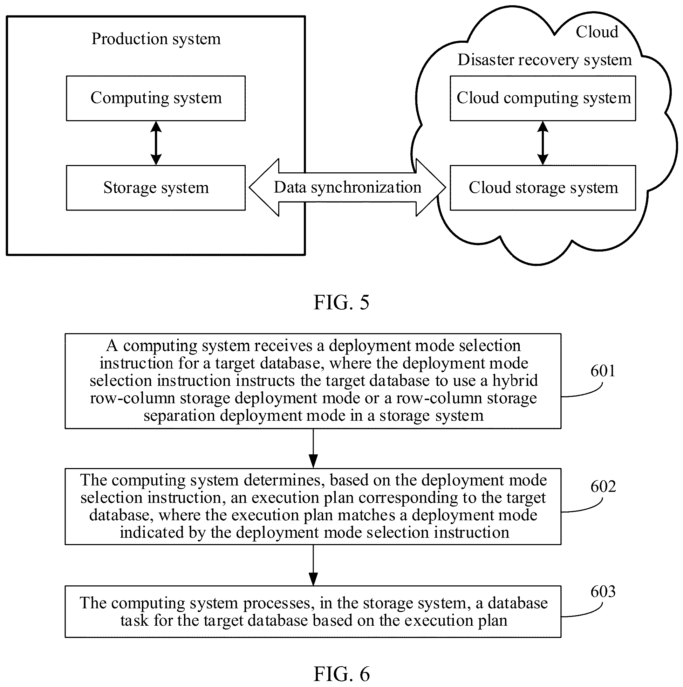

Optionally, in embodiments of this application, redundancy deployment may be performed for the database system, and specifically, redundancy deployment may be performed in a replication or backup manner. For example, FIG. 5 is a diagram of a structure of a redundancy system according to an embodiment of this application. As shown in FIG. 5, the redundancy system includes a production system and a disaster recovery system. The production system may be the database system provided in embodiments of this application, for example, may be the database system shown in FIG. 1. Alternatively, the production system can be a database appliance. Optionally, the disaster recovery system and the production system may be deployed in different places. For example, the production system is a database appliance in an equipment room, and the disaster recovery system is deployed on a cloud. Alternatively, the production system is deployed in a city A, and the disaster recovery system is deployed in a city B. In the following embodiments of this application, an example in which the disaster recovery system is deployed on the cloud is used for description.

In a possible implementation, redundancy deployment is performed on the production system in a replication manner. Correspondingly, the disaster recovery system is an application-level disaster recovery system of the production system, that is, the redundancy system can implement application-level redundancy. The replication manner may be as follows: A set of application software that is the same as that of the production system is deployed on the cloud, and synchronization to data of the production system is implemented on the cloud. For example, refer to FIG. 5. The production system includes a computing system and a storage system, and the redundancy system includes a cloud computing system and a cloud storage system. Software functions of the cloud computing system are the same as those of the computing system, and data in the cloud storage system is consistent with that in the storage system. First, in an initial phase of replication, database baseline replication is implemented in a backend in an asynchronous replication manner. Baseline replication includes replication of data pages and replication of existing logs. After baseline data replication is completed, the disaster recovery system may support consistency read. Logs written to the production system during baseline data replication need to be continuously replicated in the backend after baseline data replication is completed. Then, when new logs are written into the production system, data synchronization can be implemented in a synchronous replication manner or an asynchronous replication manner. If the synchronous replication manner is used, when logs are written into the production system, log mirror write needs to be performed in the disaster recovery system. Successful return is performed only after the logs are successfully written to both the production system and the disaster recovery system. If the asynchronous replication manner is used, logs are first written into the production system, and then the newly written logs are replicated to the disaster recovery system in the backend. In this redundancy deployment mode, when a disaster occurs in the production system, services can be redirected to the disaster recovery system on the cloud, so that the services are quickly taken over. Since storage costs are low and the computing power is elastic on the cloud, when the production system is normal, redundancy can be achieved at low costs, and computing resources can be expanded when a real disaster occurs.

In another possible implementation, redundancy deployment is performed on the production system in a backup manner. Correspondingly, the disaster recovery system is a data-level disaster recovery system of the production system, that is, the redundancy system can implement data-level redundancy. In this implementation, the disaster recovery system is used to back up data in the production system. Backup is similar to replication. An only difference lies in: When a disaster occurs in the production system, the disaster recovery system constructed in the backup manner cannot provide services but can provide only backup data for the production system to help the production system restore the services. Backup generates a large amount of data. Nevertheless, objects on the cloud have low storage costs and poor access performance, and therefore, are suitable for serving as a backup medium of data storage. Similar to replication, data stored in a database can be backed up to the cloud in a form of logs. The LSN is recorded in database logs. Therefore, when the production system restores the services, the disaster recovery system can support the production system to perform restoration to any point in time.

In embodiments of this application, a redundancy solution in which on-cloud and off-cloud cooperation is implemented through replication or backup to the cloud, and redundancy costs are low.

The following describes a method procedure in embodiments of this application by using an example.

For example, FIG. 6 is a schematic flowchart of a database task processing method according to an embodiment of this application. The method may be applied to a computing system in a database system. The computing system may be the computing system shown in any one of FIG. 1 to FIG. 3 and FIG. 5, or may be the computing server shown in FIG. 4. As shown in FIG. 6, the method includes the following steps:

Step 601: The computing system receives a deployment mode selection instruction for a target database, where the deployment mode selection instruction instructs the target database to use a hybrid row-column storage deployment mode or a row-column storage separation deployment mode in a storage system.

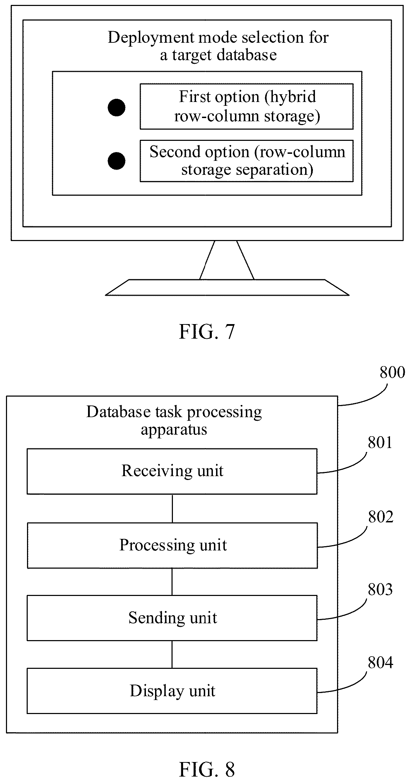

Optionally, the computing system displays a first option and a second option on a deployment mode selection interface of the target database. The first option indicates the hybrid row-column storage deployment mode. The second option indicates the row-column storage separation deployment mode. If a selection operation on the first option is detected, the computing system determines that the deployment mode selection instruction for the target database is received, and the deployment mode selection instruction indicates the hybrid row-column storage deployment mode. If a selection operation on the second option is detected, the computing system determines that the deployment mode selection instruction for the target database is received, and the deployment mode selection instruction indicates the row-column storage separation deployment mode. For example, FIG. 7 is a diagram of a display interface according to an embodiment of this application. As shown in FIG. 7, the computing system displays the first option (hybrid row-column storage) and the second option (row-column storage separation), so that users can flexibly select the hybrid row-column storage deployment mode or the row-column storage separation deployment mode for a database in a database system.

Optionally, one or more databases may be deployed in the storage system, and the target database is any database deployed in the storage system. That the database is deployed in the storage system may be understood as that a data operation on the database may be performed in the storage system. For example, data written into the database may be stored in the storage system, and data read from the database may be obtained from the storage system.

Optionally, when the computing system has a display function, that the computing system displays the first option and the second option may be that the computing system displays the first option and the second option on a display interface of the computing system. When the computing system does not have a display function, that the computing system displays the first option and the second option may be that the computing system displays the first option and the second option through a display device connected to the computing system. The display device refers to a device having a display function, including but not limited to a mobile phone, a computer, and the like.

Step 602: The computing system determines, based on the deployment mode selection instruction, an execution plan corresponding to the target database, where the execution plan matches a deployment mode indicated by the deployment mode selection instruction.

The execution plan is a group of steps that the computing system needs to perform, to complete a database task. The database task includes a transactional processing task and an analytical processing task. The computing system needs to make different execution plans for the hybrid row-column storage deployment mode and the row-column storage separation deployment mode. For example, when the database uses the hybrid row-column storage deployment mode, a row storage module and a column storage module store one piece of data together, and the transactional load and the analytical load are implemented by the row storage module and the column storage module together. For another example, when the database uses the row-column storage separation deployment mode, a row storage module and a column storage module are used to independently store one piece of data. The transactional load is implemented by the row storage module, and the analytical load is mainly implemented by the column storage module. Therefore, steps required for completing the database task vary according to the deployment mode of the database.

Optionally, the execution plan may be a query plan, and the execution plan may be a description of an execution process or an access path of a query statement in a database. The computing system may include a querier, an optimizer, and an executor. The optimizer determines the query plan based on the deployment mode, and the querier and the executor execute a query task based on the query plan.

Optionally, the storage system includes a memory-level row storage module, a block-level row storage module, and the column storage module. The memory-level row storage module and the block-level row storage module use a row storage format. The column storage module uses a column storage format. An implementation process of step 602 above may include: The computing system determines, based on the deployment mode selection instruction, a storage module used for the target database. The computing system determines, for the storage module used for the target database, the execution plan corresponding to the target database. When the deployment mode selection instruction indicates the hybrid row-column storage deployment mode, the storage module used for the target database includes the memory-level row storage module and the column storage module. For example, the target database may be the database shown in FIG. 2. When the deployment mode selection instruction indicates the row-column storage separation deployment mode, the storage module used for the target database includes the memory-level row storage module, the block-level row storage module, and the column storage module. For example, the target database may be the database shown in FIG. 3.

Optionally, when the deployment mode selection instruction indicates the hybrid row-column storage deployment mode, the memory-level row storage module used for the target database is configured to store newly written data in the row storage format, and when an amount of data stored in the memory-level row storage module is greater than a first threshold, old data stored in the memory-level row storage module is transferred to the column storage module used for the target database for storage in the column storage format. When the deployment mode selection instruction indicates the row-column storage separation deployment mode, the memory-level row storage module used for the target database is configured to store newly written data in the row storage format, and when an amount of data stored in the memory-level row storage module is greater than a second threshold, old data stored in the memory-level row storage module is transferred to the block-level row storage module used for the target database for storage, and the column storage module used for the target database is configured to store, in the column storage format, data stored in the memory-level row storage module and the block-level row storage module. Transferring for storage in embodiments of this application refers to transferring and storing. Transferring data in one storage module to another storage module for storage means that the data in the storage module is extracted and then stored into the another storage module, and the original storage module no longer stores the data.

Optionally, the storage system includes multiple storage nodes, and the multiple storage nodes include a first storage node, a second storage node, and a third storage node. The first storage node includes a memory-level row storage module and a column storage module. The second storage node includes a memory-level row storage module and a block-level row storage module. The third storage node includes a column storage module. The second storage node and the third storage node are communicatively connected. The second storage node and the third storage node are different storage nodes in the storage system. An implementation in which the computing system determines, based on the deployment mode selection instruction, the storage module used for the target database includes: When the deployment mode selection instruction indicates the hybrid row-column storage deployment mode, the computing system determines to use the memory-level row storage module and the column storage module on the first storage node for the target database. When the amount of data stored in the memory-level row storage module on the first storage node is greater than the first threshold, the old data stored in the memory-level row storage module on the first storage node is transferred to the column storage module on the first storage node for storage in the column storage format. Alternatively, when the deployment mode selection instruction indicates the row-column storage separation deployment mode, the computing system determines to use the memory-level row storage module and the block-level row storage module on the second storage node and the column storage module on the third storage node for the target database. When the amount of data stored in the memory-level row storage module on the second storage node is greater than the second threshold, the old data stored in the memory-level row storage module on the second storage node is transferred to the block-level row storage module on the second storage node for storage. The column storage module on the third storage node is configured to store, in the column storage format, data stored in the memory-level row storage module and the block-level row storage module on the second storage node.

Step 603: The computing system processes, in the storage system, a database task for the target database based on the execution plan.

Optionally, with reference to the related description of step 602, an implementation of step 603 may include: When the deployment mode selection instruction indicates the hybrid row-column storage deployment mode, the computing system processes, on the first storage node, the database task for the target database based on the execution plan. When the deployment mode selection instruction indicates the row-column storage separation deployment mode, the computing system processes, on the second storage node and the third storage node, the database task for the target database based on the execution plan.

Optionally, the third storage node is located on a cloud, and an analytical processing engine is further deployed on the cloud. When the deployment mode selection instruction indicates the row-column storage separation deployment mode, an implementation in which the computing system processes, in the storage system, the database task for the target database based on the execution plan includes: When the computing system receives an analytical processing task for the target database, the computing system sends an analytical processing request to the analytical processing engine, where the analytical processing request requests the analytical processing engine to execute the analytical processing task. The computing system receives an analytical processing result that corresponds to the analytical processing task and that is sent by the analytical processing engine. In this implementation, the computing system may be, for example, the computing server in the database appliance shown in FIG. 4, and the second storage node may be, for example, the storage server in the database appliance shown in FIG. 4. In this way, users only need to contact and use the database appliance. The computing server in the database appliance invokes computing power based on data storage distribution. In this way, the surplus computing power and low-cost storage on the cloud can be fully utilized, thereby achieving on-cloud and off-cloud collaborative computing and analysis, and improving an expansion capability of the database appliance.

In the database task processing method provided in embodiments of this application, the storage system in the database system supports the database in using both the hybrid row-column storage deployment mode and the database in using the row-column storage separation deployment mode. Correspondingly, the computing system in the database system can formulate respective matching execution plans based on different deployment modes used by the database, to execute the database task for the database. For the database system, users can comprehensively consider advantages and disadvantages of the hybrid row-column storage deployment mode and the row-column storage separation deployment mode, and flexibly select the hybrid row-column storage deployment mode or the row-column storage separation deployment mode, so that the deployed database can support running of an HTAP system, and deployment flexibility and application flexibility of the database system are improved.

A sequence of steps of the database task processing method provided in embodiments of this application can be properly adjusted, and steps can also be correspondingly added or deleted based on a situation. Any method variation readily figured out by any person skilled in the art within the technical scope disclosed in this application shall fall within the protection scope of this application.

The following describes a virtual apparatus in embodiments of this application by using an example.

For example, FIG. 8 is a diagram of a structure of a database task processing apparatus according to an embodiment of this application. The apparatus may be used in a computing system in a database system, and the database system further includes a storage system. As shown in FIG. 8, the apparatus 800 includes, but is not limited to, a receiving unit 801 and a processing unit 802. Optionally, the apparatus 800 further includes a sending unit 803 and/or a display unit 804.

The receiving unit 801 is configured to receive a deployment mode selection instruction for a target database, where the deployment mode selection instruction instructs the target database to use a hybrid row-column storage deployment mode or a row-column storage separation deployment mode in the storage system. The processing unit 802 is configured to: determine, based on the deployment mode selection instruction, an execution plan corresponding to the target database, where the execution plan matches a deployment mode indicated by the deployment mode selection instruction. The processing unit 802 is further configured to process, in the storage system, a database task for the target database based on the execution plan.

Optionally, the storage system includes a memory-level row storage module, a block-level row storage module, and a column storage module. The memory-level row storage module and the block-level row storage module use a row storage format, and the column storage module uses a column storage format. The processing unit 802 is configured to: determine, based on the deployment mode selection instruction, a storage module used for the target database; and determine the execution plan for the storage module used for the target database. When the deployment mode selection instruction indicates the hybrid row-column storage deployment mode, the storage module used for the target database includes the memory-level row storage module and the column storage module. When the deployment mode selection instruction indicates the row-column storage separation deployment mode, the storage module used for the target database includes the memory-level row storage module, the block-level row storage module, and the column storage module.

Optionally, when the deployment mode selection instruction indicates the hybrid row-column storage deployment mode, the memory-level row storage module used for the target database is configured to store newly written data in the row storage format, and when an amount of data stored in the memory-level row storage module is greater than a first threshold, old data stored in the memory-level row storage module is transferred to the column storage module used for the target database for storage in the column storage format. When the deployment mode selection instruction indicates the row-column storage separation deployment mode, the memory-level row storage module used for the target database is configured to store newly written data in the row storage format, and when an amount of data stored in the memory-level row storage module is greater than a second threshold, old data stored in the memory-level row storage module is transferred to the block-level row storage module used for the target database for storage, and the column storage module used for the target database is configured to store, in the column storage format, data stored in the memory-level row storage module and the block-level row storage module.

Optionally, the storage system includes multiple storage nodes, the multiple storage nodes include a first storage node including a memory-level row storage module and a column storage module. The processing unit 802 is configured to: determine, when the deployment mode selection instruction indicates the hybrid row-column storage deployment mode, to use the memory-level row storage module and the column storage module on the first storage node for the target database.

Optionally, the storage system includes multiple storage nodes including a second storage node and a third storage node, the second storage node includes a memory-level row storage module and a block-level row storage module, the third storage node includes a column storage module, and the second storage node and the third storage node are communicatively connected. The processing unit 802 is configured to: determine, when the deployment mode selection instruction indicates the row-column storage separation deployment mode, to use the memory-level row storage module and the block-level row storage module on the second storage node and the column storage module on the third storage node for the target database.

Optionally, the third storage node is located on a cloud, and an analytical processing engine is further deployed on the cloud. The database task includes an analytical processing task. The sending unit 803 is configured to: send, in a case that the deployment mode selection instruction indicates the row-column storage separation deployment mode and when the computing system receives the analytical processing task for the target database, an analytical processing request to the analytical processing engine, where the analytical processing request requests the analytical processing engine to execute the analytical processing task. The receiving unit 801 is further configured to receive an analytical processing result that corresponds to the analytical processing task and that is sent by the analytical processing engine.

Optionally, the display unit 804 is configured to display a first option and a second option on a deployment mode selection interface of the target database, where the first option indicates the hybrid row-column storage deployment mode, and the second option indicates the row-column storage separation deployment mode. The processing unit 802 is further configured to: determine, if a selection operation on the first option is detected, that the deployment mode selection instruction is received, where the deployment mode selection instruction indicates the hybrid row-column storage deployment mode. The processing unit 802 is further configured to: determine, if a selection operation on the second option is detected, that the deployment mode selection instruction is received, where the deployment mode selection instruction indicates the row-column storage separation deployment mode.

For the apparatus in the foregoing embodiments, specific manners of executing operations by each functional unit of the apparatus has been described in detail in embodiments related to the method, and details are not described herein.

The following describes a basic hardware structure in embodiments of this application by using an example.

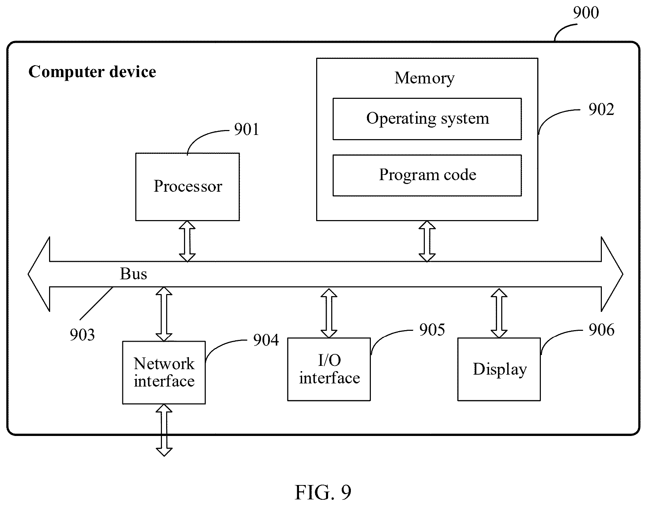

For example, FIG. 9 is a diagram of a hardware structure of a computer device according to an embodiment of this application. As shown in FIG. 9, the computer device 900 includes a processor 901 and a memory 902. The memory 901 is connected to the memory 902 through a bus 903. FIG. 9 is described by using an example in which the processor 901 and the memory 902 are independent of each other. Optionally, the processor 901 and the memory 902 are integrated together. The computer device 900 may be, for example, a computing system in a database system.

The memory 902 is configured to store a computer program, and the computer program includes an operating system and program code. The memory 902 is various types of storage media, for example, a read-only memory (read-only memory, ROM), a random access memory (random access memory, RAM), an electrically erasable programmable read-only memory (electrically erasable programmable read-only memory, EEPROM), a compact disc read-only memory (compact disc read-only memory, CD-ROM), a flash memory, an optical memory, a register, a compact disk storage, an optical disc storage, a magnetic disk, or another magnetic storage device.

The processor 901 is a general-purpose processor, a dedicated processor, or the like. The processor 901 may be a single-core processor or a multi-core processor. The processor 901 includes at least one circuit, to perform the foregoing database task processing method provided in embodiments of this application.

Optionally, the computer device 900 further includes a network interface 904, and the network interface 904 is connected to the processor 901 and the memory 902 through the bus 903. The network interface 904 can implement communication between the computer device 900 and another device.

Optionally, the computer device 900 further includes an input/output (input/output, I/O) interface 905. The I/O interface 905 is connected to the processor 901 and the memory 902 through the bus 903. The processor 901 can receive an input command, input data, or the like through the I/O interface 905. The I/O interface 905 is configured to connect the computer device 900 to an input device, where the input device is, for example, a keyboard or a mouse. Optionally, in some possible scenarios, the foregoing network interface 904 and the I/O interface 905 are collectively referred to as a communication interface.

Optionally, the computer device 900 further includes a display 906, and the display 906 is connected to the processor 901 and the memory 902 through the bus 903. The display 906 can be configured to display an intermediate result, a final result, and/or the like generated by the processor 901 for performing the foregoing method, for example, display options for different deployment modes. In a possible implementation, the display 906 is a touchscreen, to provide a human-computer interaction interface.

The bus 903 is a communication bus of any type, is configured to implement interconnection between internal components of the computer device 900, and is for example, a system bus. In this embodiment of this application, an example in which the foregoing internal components of the computer device 900 are interconnected through the bus 903 is used for description. Optionally, communication connection between the foregoing internal components of the computer device 900 is implemented in another connection manner other than the bus 903. For example, the foregoing internal components of the computer device 900 are interconnected through a logical interface inside the computer device 900.

The foregoing components may be separately disposed on chips that are independent of each other, or at least some or all of the components may be disposed on a same chip. Whether the components are separately disposed on different chips or integrated and disposed on one or more chips usually depends on a requirement of a product design. A specific implementation of the foregoing components is not limited in embodiments of this application.

The computer device 900 shown in FIG. 9 is merely an example. In an implementation process, the computer device 900 may further include other components, which are not listed one by one in this specification. The computer device 900 shown in FIG. 9 may process a database task by performing all or some steps of the method provided in the foregoing embodiments.

An embodiment of this application further provides a computer-readable storage medium, where the computer-readable storage medium stores instructions; and when the instructions are executed by a processor, the method shown in FIG. 6 is implemented.

An embodiment of this application further provides a computer program product, including a computer program. When the computer program is executed by a processor, the method shown in FIG. 6 is implemented.

A person of ordinary skill in the art may understand that all or some of the steps of embodiments may be implemented by hardware or a program instructing related hardware. The program may be stored in a computer-readable storage medium. The storage medium may be a read-only memory, a magnetic disk, an optical disc, or the like.

In embodiments of this application, the terms "first", "second", and "third" are merely used for a purpose of description, but shall not be understood as an indication or implication of relative importance.

The term "and/or" in this application describes only an association relationship for describing associated objects and represents that three relationships may exist. For example, A and/or B may represent the following three cases: Only A exists, both A and B exist, and only B exists. In addition, the character "/" in this specification generally represents an "or" relationship between the associated objects.

It should be noted that information (including but not limited to user equipment information, user personal information, and the like), data (including but not limited to data used for analysis, stored data, displayed data, and the like), and signals in this application are used under authorization by users or fully authorized by each party, and collection, use, and processing of related data need to comply with relevant laws, regulations, and standards of relevant countries and regions.

The foregoing descriptions are merely optional embodiments of this application, but are not intended to limit this application. Any modification, equivalent replacement, improvement, or the like made within the concept and principle of this application shall fall within the protection scope of this application.

## Claims

1. A database task processing method, applied to a database system, wherein the database system comprises a computing system and a storage system, and the method comprises:
receiving, by the computing system, a deployment mode selection instruction for a target database, wherein the deployment mode selection instruction instructs the target database to use a hybrid row-column storage deployment mode or a row-column storage separation deployment mode in the storage system;
determining, by the computing system based on the deployment mode selection instruction, an execution plan corresponding to the target database, wherein the execution plan matches a deployment mode indicated by the deployment mode selection instruction; and
processing, by the computing system in the storage system, a database task for the target database based on the execution plan.

2. The method according to claim 1, wherein the storage system comprises a memory-level row storage module, a block-level row storage module, and a column storage module, the memory-level row storage module and the block-level row storage module use a row storage format, and the column storage module uses a column storage format; and determining, by the computing system based on the deployment mode selection instruction, the execution plan corresponding to the target database comprises:
determining, by the computing system based on the deployment mode selection instruction, a storage module used for the target database; and
determining, by the computing system, the execution plan for the storage module used for the target database, wherein
when the deployment mode selection instruction indicates the hybrid row-column storage deployment mode, the storage module used for the target database comprises the memory-level row storage module and the column storage module; or when the deployment mode selection instruction indicates the row-column storage separation deployment mode, the storage module used for the target database comprises the memory-level row storage module, the block-level row storage module, and the column storage module.

3. The method according to claim 2, wherein
when the deployment mode selection instruction indicates the hybrid row-column storage deployment mode, the memory-level row storage module used for the target database is configured to store newly written data in the row storage format, and when an amount of data stored in the memory-level row storage module is greater than a first threshold, old data stored in the memory-level row storage module is transferred to the column storage module used for the target database for storage in the column storage format; or
when the deployment mode selection instruction indicates the row-column storage separation deployment mode, the memory-level row storage module used for the target database is configured to store newly written data in the row storage format, and when an amount of data stored in the memory-level row storage module is greater than a second threshold, old data stored in the memory-level row storage module is transferred to the block-level row storage module used for the target database for storage, and the column storage module used for the target database is configured to store, in the column storage format, data stored in the memory-level row storage module and the block-level row storage module.

4. The method according to claim 2 or 3, wherein the storage system comprises multiple storage nodes comprising a first storage node, the first storage node comprises a memory-level row storage module and a column storage module, and determining, by the computing system based on the deployment mode selection instruction, the storage module used for the target database comprises:
when the deployment mode selection instruction indicates the hybrid row-column storage deployment mode, determining, by the computing system, to use the memory-level row storage module and the column storage module on the first storage node for the target database.

5. The method according to claim 2 or 3, wherein the storage system comprises multiple storage nodes comprising a second storage node and a third storage node, the second storage node comprises a memory-level row storage module and a block-level row storage module, the third storage node comprises a column storage module, and the second storage node and the third storage node are communicatively connected; and determining, by the computing system based on the deployment mode selection instruction, the storage module used for the target database comprises:
when the deployment mode selection instruction indicates the row-column storage separation deployment mode, determining, by the computing system, to use the memory-level row storage module and the block-level row storage module on the second storage node and the column storage module on the third storage node for the target database.

6. The method according to claim 5, wherein the third storage node is located on a cloud, an analytical processing engine is further deployed on the cloud, the database task comprises an analytical processing task, and when the deployment mode selection instruction indicates the row-column storage separation deployment mode, processing, by the computing system in the storage system, the database task for the target database based on the execution plan comprises:
when the computing system receives the analytical processing task for the target database, sending, by the computing system, an analytical processing request to the analytical processing engine, wherein the analytical processing request requests the analytical processing engine to execute the analytical processing task; and
receiving, by the computing system, an analytical processing result that corresponds to the analytical processing task and that is sent by the analytical processing engine.

7. The method according to any one of claims 1 to 6, wherein the method further comprises:
displaying, by the computing system, a first option and a second option on a deployment mode selection interface of the target database, wherein the first option indicates the hybrid row-column storage deployment mode, and the second option indicates the row-column storage separation deployment mode; and
if a selection operation on the first option is detected, determining, by the computing system, that the deployment mode selection instruction is received, wherein the deployment mode selection instruction indicates the hybrid row-column storage deployment mode; or
if a selection operation on the second option is detected, determining, by the computing system, that the deployment mode selection instruction is received, wherein the deployment mode selection instruction indicates the row-column storage separation deployment mode.

8. A database task processing apparatus, used in a computing system in a database system, wherein the database system further comprises a storage system, and the apparatus comprises:
a receiving unit, configured to receive a deployment mode selection instruction for a target database, wherein the deployment mode selection instruction instructs the target database to use a hybrid row-column storage deployment mode or a row-column storage separation deployment mode in the storage system; and
a processing unit, configured to determine, based on the deployment mode selection instruction, an execution plan corresponding to the target database, wherein the execution plan matches a deployment mode indicated by the deployment mode selection instruction, wherein
the processing unit is further configured to process, in the storage system, a database task for the target database based on the execution plan.

9. The apparatus according to claim 8, wherein the storage system comprises a memory-level row storage module, a block-level row storage module, and a column storage module, the memory-level row storage module and the block-level row storage module use a row storage format, and the column storage module uses a column storage format; and the processing unit is configured to:
determine, based on the deployment mode selection instruction, a storage module used for the target database; and
determine the execution plan for the storage module used for the target database, wherein
when the deployment mode selection instruction indicates the hybrid row-column storage deployment mode, the storage module used for the target database comprises the memory-level row storage module and the column storage module; or when the deployment mode selection instruction indicates the row-column storage separation deployment mode, the storage module used for the target database comprises the memory-level row storage module, the block-level row storage module, and the column storage module.

10. The apparatus according to claim 9, wherein
when the deployment mode selection instruction indicates the hybrid row-column storage deployment mode, the memory-level row storage module used for the target database is configured to store newly written data in the row storage format, and when an amount of data stored in the memory-level row storage module is greater than a first threshold, old data stored in the memory-level row storage module is transferred to the column storage module used for the target database for storage in the column storage format; or
when the deployment mode selection instruction indicates the row-column storage separation deployment mode, the memory-level row storage module used for the target database is configured to store newly written data in the row storage format, and when an amount of data stored in the memory-level row storage module is greater than a second threshold, old data stored in the memory-level row storage module is transferred to the block-level row storage module used for the target database for storage, and the column storage module used for the target database is configured to store, in the column storage format, data stored in the memory-level row storage module and the block-level row storage module.

11. The apparatus according to claim 9 or 10, wherein the storage system comprises multiple storage nodes comprising a first storage node, the first storage node comprises a memory-level row storage module and a column storage module, and the processing unit is configured to:
determine, when the deployment mode selection instruction indicates the hybrid row-column storage deployment mode, to use the memory-level row storage module and the column storage module on the first storage node for the target database.

12. The apparatus according to claim 9 or 10, wherein the storage system comprises multiple storage nodes comprising a second storage node and a third storage node, the second storage node comprises a memory-level row storage module and a block-level row storage module, the third storage node comprises a column storage module, and the second storage node and the third storage node are communicatively connected; and the processing unit is configured to:
determine, when the deployment mode selection instruction indicates the row-column storage separation deployment mode, to use the memory-level row storage module and the block-level row storage module on the second storage node and the column storage module on the third storage node for the target database.

13. The apparatus according to claim 12, wherein the third storage node is located on a cloud, an analytical processing engine is further deployed on the cloud, the database task comprises an analytical processing task, and the apparatus further comprises a sending unit, wherein
the sending unit is configured to: send, in a case that the deployment mode selection instruction indicates the row-column storage separation deployment mode and when the computing system receives the analytical processing task for the target database, an analytical processing request to the analytical processing engine, wherein the analytical processing request requests the analytical processing engine to execute the analytical processing task; and
the receiving unit is further configured to receive an analytical processing result that corresponds to the analytical processing task and that is sent by the analytical processing engine.

14. The apparatus according to any one of claims 8 to 13, wherein the apparatus further comprises a display unit;
the display unit is configured to display a first option and a second option on a deployment mode selection interface of the target database, wherein the first option indicates the hybrid row-column storage deployment mode, and the second option indicates the row-column storage separation deployment mode; and
the processing unit is further configured to: determine, if a selection operation on the first option is detected, that the deployment mode selection instruction is received, wherein the deployment mode selection instruction indicates the hybrid row-column storage deployment mode; or
the processing unit is further configured to: determine, if a selection operation on the second option is detected, that the deployment mode selection instruction is received, wherein the deployment mode selection instruction indicates the row-column storage separation deployment mode.

15. A database system, comprising a computing system and a storage system, wherein the storage system is configured to store data, and the computing system is configured to invoke the storage system to implement the method according to any one of claims 1 to 7.

16. A redundancy system, comprising a production system and a disaster recovery system, wherein the production system is the database system according to claim 15, and the disaster recovery system is an application-level disaster recovery system or a data-level disaster recovery system of the production system.

17. A computer device, comprising a processor and a memory, wherein
the memory is configured to store a computer program, and the computer program comprises program instructions; and
the processor is configured to invoke the computer program, to implement the method according to any one of claims 1 to 7.

18. A computer-readable storage medium, wherein the computer-readable storage medium stores instructions; and when the instructions are executed by a processor, the method according to any one of claims 1 to 7 is implemented.

19. A computer program product, comprising a computer program, wherein when the computer program is executed by a processor, the method according to any one of claims 1 to 7 is implemented.
